# EUROPÄISCHE PATENTSCHRIFT

(11) **EP 2 467 835 B1**
(45) Veröffentlichungstag und Bekanntmachung des Hinweises auf die Patenterteilung: **29.04.2015**
(21) Anmeldenummer: 10739603.8
(22) Anmeldetag: 30.07.2010
(51) Int. Cl.: G07C 7/00, G01D 11/30, G07C 5/08

(54) **KONTROLLGERÄT**
CONTROL DEVICE
APPAREIL DE CONTRÔLE

(30) Priorität: 20.08.2009 DE 102009043815; 12.01.2010 DE 102010000056
(43) Veröffentlichungstag der Anmeldung: 27.06.2012
(73) Patentinhaber: Intellic Germany GmbH, 13355 Berlin (DE)
(72) Erfinder: ROSE, Bernd, 16552 Schildow (DE); BORK, Andreas, 89073 Ulm (DE); NEUDECKER, Johannes, 12205 Berlin (DE)
(74) Vertreter: Pröll, Jürgen
(86) Internationale Anmeldenummer: PCT/EP2010/061120
(87) Internationale Veröffentlichungsnummer: WO 2011/020689

(56) Entgegenhaltungen:
- EP-A1- 0 918 222
- WO-A1-99/44919
- DE-A1-102004 030 869
- DE-A1-102006 036 066
- DE-A1-102007 038 690
- US-A- 5 303 163

## Beschreibung

Die Erfindung betrifft ein Kontrollgerät für Kraftfahrzeuge mit einem in einem Schacht des Kontrollgerätes eingebrachten und dort entfernbar angeordneten Druckermodul mit den im Oberbegriff des Anspruches 1 angegebenen Merkmalen.

In Kraftfahrzeugen und insbesondere in Lastkraftwagen oder Bussen sind Kontrollgeräte, wie z.B. Tachographen bzw. Fahrtenschreiber, angeordnet. So müssen z.B. Lastkraftwagen Fahrtenschreiber aufweisen, welche die gefahrene Kilometerzahl erfassen, aber auch die Anzahl der Stunden, die der Fahrer bereits am Steuer des Lastkraftwagens gesessen hat, um die Ruhezeiten des Fahrers überprüfen zu können. Die Europäische Union schreibt vor, dass die gegenwärtig in der EU vorgeschriebenen digitalen Tachographen über einen Drucker verfügen müssen, um die erfassten Daten, welche der Tachograph aufgezeichnet hat, ausdrucken zu können, um so diese Daten überprüfen zu können. Bei diesen Daten handelt es sich unter anderem um die vom Fahrer gefahrene Stundenanzahl oder auch um Verstöße gegen gesetzliche Regelungen, wie z. B. Überschreitungen der zulässigen Höchstgeschwindigkeit oder Manipulationsversuche am Tachographen. Der Drucker für das Ausdrucken dieser Daten wird in der Regel nicht sehr häufig verwendet. Zumeist sind aber in einem Kraftfahrzeug noch weitere Geräte angeordnet, die für das Fahrzeug und die Fahrt relevant sind oder auch nur dem Fahrer dienen, wie beispielsweise Navigationsgeräte, Mauterfassungsgeräte, Flottenmanagementgeräte; Radio- und/oder CD-Spieler, Freisprecheinrichtung für Mobiltelefonie, Unfalldatenschreiber, Alarmsysteme und vieles mehr. Alle diese Geräte weisen eigene Anschlüsse, eine eigene Energieversorgung und eigene Datenleitungen auf. Außerdem haben diese Geräte alle eigene zugeordnete Einheiten, wie z. B. GPS-Antennen und/oder GSM-Antennen, welche wiederum entsprechend eigene Empfangsmodi und jeweils am Gerät angeordnete, zumeist gerätespezifische Schnittstellen aufweisen.

Nachteil der Vielzahl dieser Geräte mit ihren eigenen Schnittstellen und zugeordneten Einheiten ist, dass eine Vielzahl diversen Geräten zugeordnete Einheiten und Kabel im Fahrzeuginnenraum vorhanden sind. Dies führt zu einer Vielzahl von zu verlegenden Kabeln, was wiederum zu einer Erhöhung des Gewichtes des Fahrzeuges und zu einem nicht unerheblichen Kostenfaktor beiträgt.

Digitale Tachographen sind in der Europäischen Union seit dem 01.05.2006 in neu zugelassenen Lastkraftwagen und Bussen vorgeschrieben. Vorteilhaft bei digitalen Tachographen ist, dass eine Manipulation nur erschwert möglich ist. Fahrzeugrelevante und fahrerrelevante Daten werden über einen bestimmten Zeitraum in einem Speicher des Kontrollgerätes gespeichert, bis sie vorschriftsmäßig ausgelesen worden sind oder ausgelesen werden müssen.

In der Offenlegungsschrift DE 10 2004 030 869 A1 mit dem Titel "Datenübertragung in einer Anordnung mit einem Tachographen" ist eine Anordnung mit einem Tachographen beschrieben, der fahrzeugrelevante Daten digital in einen ersten Speicher speichert. Der Tachograph ist mit einem mobilen externen Datenspeichergerät, das einen zweiten Speicher aufweist, verbunden. Eine externe erste Schnittstelle ist mit dem Tachographen und eine externe zweite Schnittstelle mit dem externen Datenspeichergerät verbunden. Die zweite externe Schnittstelle korrespondiert mit der ersten externen Schnittstelle, so dass Daten zwischen der ersten externen und der zweiten externen Schnittstelle übertragbar sind. Der in dieser Erfindung beschriebene Tachograph weist eine erste Verschlüsselungseinheit auf, welche der ersten externen Schnittstelle zugeordnet ist. Das externe Datenspeichergerät weist eine zweite Verschlüsselungseinheit auf, welche der zweiten externen Schnittstelle zugeordnet ist. Auf diese Weise können Daten zwischen der ersten externen Schnittstelle und der zweiten externen Schnittstelle verschlüsselt übertragen werden.

In der Offenlegungsschrift DE 10 2006 036 066 A1 mit dem Titel "Kontrollgerät für ein Kraftfahrzeug, insbesondere Tachograph" ist ein Kontrollgerät für ein Fahrzeug sowie ein Verfahren zu dessen Betrieb offenbart. Das Kontrollgerät weist eine Verbindung zu einem verschlüsselten Impulsgeber auf, der vorzugsweise im Fahrzeugantriebsstrang angeordnet ist. Es ist eine elektronische Recheneinheit zur Bearbeitung und/oder Verarbeitung und/oder Speicherung von Fahrzeuginformationen in Abhängigkeit von einer geräteinternen Zeitinformation vorhanden. Außerdem sind wenigstens ein Massenspeicher sowie wenigstens eine Mensch-Maschine-Schnittstelle, eine kombinierte Schreib-Leseeinheit für mobile Datenträger, insbesondere für personalisierte Datenspeicher- oder Chipkarten, vorhanden. Außerdem weist das Kontrollgerät mindestens eine zusätzliche verschlüsselte Verbindung zu einem zusätzlichen Geber auf. Das Kontrollgerät ist zusätzlich mit softwaregeschützten Plausibilisierungsroutinen ausgestattet.

Die Offenlegungsschrift DE 10 2007 038 690 A1 mit dem Titel "Tachograph, Anordnung und Verfahren zur Daten-Übertragung über eine benutzerfreundliche Schnittstelle" offenbart einen Tachographen, der fahrer- und/oder fahrzeugbezogene Daten digital in einem internen Speicher speichert und eine Schnittstelle zur Übertragung an externe Geräte aufweist. Diese Schnittstelle ist eine an der Frontblende des Tachographen frei zugänglich eingerichtete Schnittstelle, die für eine Übertragung von Authentifizierungs-Daten und für eine davon abhängige Übertragung der fahrer- und/oder fahrzeugbezogenen Daten eingerichtet ist. Es besteht dabei auch die Möglichkeit, eine Fernabfrage der fahrzeug- und/oder fahrerbezogenen Daten vorzunehmen.

Ausgehend von diesem Stand er Technik liegt der vorliegenden Erfindung die Aufgabe zu Grunde, ein Kontrollgerät für ein Kraftfahrzeug aufzuzeigen, welches es ermöglicht, mehrere Zusatz-Geräte gleichzeitig an das Kontrollgerät anzuschließen und dabei den Raum, den herkömmlicherweise der Drucker im digitalen Tachographen beansprucht, zu nutzen, ohne auf die Möglichkeit des Erzeugens von Ausdrucken verzichten zu müssen.

Das Dokument EP0913222 beschreibt ein Kontrollgerät gemäß den Stand der Technik.

Diese Aufgabe wird anhand der Merkmale des Patentanspruches 1 gelöst.

Vorteilhafte Ausgestaltungen der Erfindung ergeben sich anhand der weiteren Beschreibung, der abhängigen Patentansprüche sowie anhand der Figuren zu einem konkreten Ausführungsbeispiel und der zugehörigen Figurenbeschreibung.

Die vorliegende Erfindung zeichnet sich dadurch aus, dass das Kontrollgerät für ein Fahrzeug mit einem herausnehmbaren Druckermodul und einer Schnittstelle zum Anschließen dieses Druckermoduls ausgestattet ist. Das Druckermodul ist in einem Schacht des Kontrollgerätes angeordnet und kann in einfacher Weise - ohne Zuhilfenahme von Werkzeug - aus dem Schacht entfernt und gegebenenfalls erneut eingesetzt werden. In diesem Schacht ist eine erste Schnittstelle, eine im Weiteren so genannte "Drucker-Schnittstelle", angeordnet, welche die Verbindung zwischen dem Kontrollgerät und dem Druckermodul herstellt. Das Druckermodul weist eine zur im Schacht angeordneten ersten Schnittstelle korrespondierende Schnittstelle auf, welche beim Einführen des Druckermoduls in den Schacht eine elektrische und eine mechanische Verbindung zur ersten Schnittstelle herstellt. Anstelle des Druckermoduls kann in den Schacht ein Erweiterungsmodul eingesetzt werden, das ebenfalls über eine am Erweiterungsmodul vorhandene Schnittstelle mit der Drucker- Schnittstelle des Kontrollgerätes verbindbar ist. Zusätzlich kann im Schacht eine zweite elektrische Schnittstelle, eine im Weiteren so genannte "Zusatz-Schnittstelle", vorgesehen werden, die vom Druckermodul nicht benötigt und benutzt wird, die jedoch zur Verbindung mit dem Erweiterungsmodul benutzt werden kann. In diesem Falle weist das Erweiterungsmodul eine korrespondierende Schnittstelle auf.

Vorteilhaft gemäß der vorliegenden Erfindung ist, dass in den Schacht, in dem ursprünglich ein Drucker vorgesehen ist, auch andere Geräte einsetzbar sind. Diese anderen im folgenden als Erweiterungsmodul bezeichneten Geräte weisen eine zusätzliche dritte Schnittstelle, eine im Weiteren so genannte "Erweiterungs-Schnittstelle", auf, über welche weitere Geräte anschließbar sind, so dass mehrere Geräte oder Module gleichzeitig über das Erweiterungsmodul mit dem Kontrollgerät verbindbar sind. Zusätzlich kann eine Eingabeeinheit, welche ebenfalls über die Schnittstellen angebunden sein kann, vorhanden sein.

In einer weiteren vorteilhaften Ausgestaltung der Erfindung ist die zusätzliche Eingabeeinheit direkt in das Erweiterungsmodul integriert. An das Erweiterungsmodul kann ein Kommunikationsmodul angeschlossen werden. Wird ein Erweiterungsmodul in den Schacht des Kontrollgerätes eingesetzt, so kann dieses über die Erweiterungs-Schnittstelle mit mehreren Geräten verbunden werden und eine gleichzeitige Bedienung dieser Geräte ist möglich. Weiterhin ist von Vorteil, dass die Anzahl von Mehrfach-Komponenten, wie beispielsweise Empfänger und Antennen oder Modems, die für die Datenübertragung notwendig sind, reduzierbar ist, da alle angeschlossenen Geräte die Mehrfach-Komponenten nutzen und alle Informationen über das Erweiterungsmodul und über dessen Schnittstellenverbindungen übertragen werden. Aufgrund der dadurch bewirkten Reduzierung der Verkabelung und der Reduzierung der Vielzahl an Hardware-Komponenten, wie Antennen, Modems oder dergleichen, ist für den Fahrer eine verbesserte Übersichtlichkeit im Fahrzeuginnenraum gegeben. Ebenfalls können durch die Verringerung der Hardware-Komponenten Kosten reduziert, sowie auch eine Platzeinsparung im Fahrzeuginneren ermöglicht werden. Dadurch kommt es auch zur Verringerung der Fahrzeugmasse und in der Folge zur Einsparung von Kraftstoff.

Außerdem ist es möglich, das Druckermodul mit dem Kontrollgerät direkt oder über das Erweiterungsmodul zu verbinden, so dass jederzeit die Daten aus dem Tachographen ausgedruckt werden können, so wie es von der Europäischen Union vorgeschrieben ist. Bei Anschluss des Druckermoduls über das Erweiterungsmodul ist es auch möglich andere Daten, die nicht aus dem Tachographen sondern von anderen Geräten stammen, auszudrucken. Das Druckermodul kann in diesen Fällen über einen Adapter an die Erweiterungs-Schnittstelle des Erweiterungsmoduls oder an die Service-Schnittstelle des Tachographen angeschlossen und später auch wieder getrennt werden, wenn es nicht mehr benötigt wird. Das Druckermodul kann aber auch nach wie vor direkt mit dem Kontrollgerät über die Drucker-Schnittstelle im Schacht des Kontrollgerätes verbunden werden, durch Herausnehmen des Erweiterungsmoduls aus dem Schacht und Einführung des Druckermoduls in den Schacht.

Eine weitere Option, im Tachographen oder auf einer Tachographenkarte gespeicherte Daten zu erlangen, ist der Download, beispielsweise über ein Remote-Download-Protokoll oder durch Auslesen der Daten an der Service-Schnittstelle des Tachographen. Dies kann erfindungsgemäß ebenfalls über die im Schacht angeordnete erste und/oder zweite Schnittstelle erfolgen, indem mit der/den Schnittstellen ein entsprechendes Erweiterungsmodul verbunden wird, das seinerseits über die Erweiterungsschnittstelle mit dem Download-Gerät oder mit einer Übertragungseinrichtung für den Remote-Download verbunden ist. Weiterhin können die zu übertragenden Daten auch im Erweiterungsmodul zwischengespeichert werden, so dass diese Informationen auch über das Kommunikationsmodul ohne Mitwirkung des Tachographen - also z. B. wenn das Fahrzeug steht und sich der Tachograph im Stand-by-Zustand befindet - abgerufen werden können.

Die Schnittstellen zwischen dem Kontrollgerät und dem Erweiterungsmodul sind elektrische und/oder mechanische Schnittstellen. Das Erweiterungsmodul kann mindestens eine weitere Schnittstelle aufweisen. Das Erweiterungsmodul kann mit der ersten Schnittstelle des Kontrollgerätes verbunden sein und eine weitere Schnittstelle aufweisen, über die ein Kommunikationsmodul und/oder ein Druckermodul mit einem Adapter verbunden werden kann. Das mit dem Kommunikationsmodul und ggf. zusätzlichen Erweiterungsmodulen oder -geräten verbundene Erweiterungsmodul kann die Funktionen eines Navigationsgerätes, eines Mauterfassungsgerätes, einer Freisprecheinrichtung für Mobiltelefonie, eines Flottenmanagementgerätes, eines Unfalldatenschreibers, eines Alarmsystems und/oder auch eines nicht-fahrzeugrelevanten Gerätes, wie beispielsweise eines CD-Players, eines MP3-Players, ein Radiogerätes oder eines Minifernsehgerätes realisieren. Vorteilhaft an dieser Ausführungsform des Kontrollgerätes ist, dass verschiedenste Geräte zumindest teilweise physikalisch in das Kontrollgerät integrierbar sind, ohne dass eine logische und/oder elektrische Verbindung erfolgen muss. Beispielsweise steuert das Erweiterungsmodul ein oder mehrere Kommunikationsmodule und/oder ein Drucker-Adapter mit integriertem Druckermodul. Bei dem Drucker-Adapter handelt es sich um eine Anordnung, in welche ein Druckermodul zum Ausdrucken der in der Kontrolleinheit gespeicherten Daten angeordnet werden kann. Eine Bedienung des Erweiterungsmoduls kann eine Bedienung eines oder mehrerer Kommunikationsmodule mit einschließen. Für den Fahrer hat dies den Vorteil, dass er nur noch ein Gerät bzw. eine Bedieneinheit betätigen muss, um die Funktionen verschiedener Geräte nutzen oder einstellen zu können. Außerdem können in dem Erweiterungsmodul in Verbindung mit dem Kommunikationsmodul bereits alle Hardwarekomponenten zur Übertragung von Daten integriert sein, wie beispielsweise Antennen oder Modems.

In einer weiteren Ausführungsform der Erfindung ist zwischen dem Erweiterungsmodul im Kontrollgerät und dem Kommunikationsmodul eine Verbindung vorhanden, die über eine eigene Datenleitung verläuft und/oder über ein bereits im Fahrzeug vorhandenes Bussystem erfolgt. Es ist aber auch möglich, eine Datenverbindung zwischen Erweiterungsmodul einerseits und Kommunikationsmodul und/oder Drucker-Adapter mit integriertem Druckermodul andererseits über drahtlose Kurzstrecken-Verbindungstechnologien wie z. B. Bluetooth, Infrarot, Wireless-LAN (W-LAN) oder Infrarot (IrDA) herzustellen. Vorteilhaft an dieser Ausgestaltungsform ist, dass eine Verbindung über sämtliche Arten von elektrischen oder optischen Schnittstellen, ob kabelgebundene oder kabellose Schnittstellen, hergestellt werden kann, so dass nur wenige Kabelstränge im Fahrzeuginnenraum verlegt werden müssen, um eine Verbindung zwischen dem Erweiterungsmodul im Kontrollgerät und den mit diesem verbundenen Geräten/Modulen (z. B. Kommunikationsmodul) herzustellen.

Weiterhin kann die Erweiterungs-Schnittstelle des Erweiterungsmoduls auch als USB-Anschlussschnittstelle und/oder Mini-USB-Anschlussschnittstelle und/oder SD-Anschlussschnittstelle ausgeführt sein. Vorteilhaft an dieser Ausführung der Erfindung ist, dass auch Geräte und/oder Module über das Erweiterungsmodul mit dem Kontrollgerät verbunden werden können, welche keine Möglichkeit der drahtlosen Kommunikation aufweisen. Somit können verschiedenste Geräte und/oder Module an das Kontrollgerät drahtlos oder auch durch eine Kabelverbindung angeschlossen werden.

Weiterhin ist bei der vorliegenden Erfindung in einer vorteilhaften Ausgestaltung vorgesehen, eine Mensch-Maschine-Schnittstelle an dem Erweiterungsmodul und/oder an dem Kommunikationsmodul anzuordnen. Vorteilhaft an dieser Mensch-Maschine-Schnittstelle ist, dass eine Bedienung aller Funktionen, die durch das Kommunikationsmodul und/oder das Erweiterungsmodul realisiert werden, in einfacher Weise ermöglicht wird.

In einer besonders vorteilhaften Ausgestaltung der Erfindung ist die Mensch-Maschine-Schnittstelle in Anspruch 10 als Touch-Screen und/oder Bedienfeld ausgeführt, welches das Erweiterungsmodul und/oder das Kommunikationsmodul steuert. Vorteilhaft an einem Bedienfeld und/oder einem Touch-Screen ist, dass diese Geräte intuitiv genutzt und alle Einstellungen und Funktionen des Erweiterungsmoduls und/oder des Kommunikationsmoduls mit Hilfe des Touch-Screens und/oder des Bedienfeldes eingestellt werden können. Touch-Screens weisen weiterhin den Vorteil auf, dass der Bildschirm alle möglichen, an das Erweiterungsmodul angeschlossenen Kommunikationsmodule anzeigt und mittels des Touch-Screens die verschiedenen Module ausgewählt und deren Funktionen und Einstellungen nach Bedarf eingestellt werden können.

Eine weitere vorteilhafte Ausführungsform der Erfindung besteht darin, dass die Energieversorgung des Erweiterungsmoduls und/oder des Kommunikationsmoduls und/oder des Druckermoduls über die Energieversorgung des Kontrollgerätes verläuft. Es ist aber auch möglich, dass das Erweiterungsmodul und/oder das Kommunikationsmodul über eine eigene Energieversorgung verfügen. Diese Energieversorgung bedient sich entweder des Bordnetzes des Kraftfahrzeugs, kann aber auch z.B. durch eine Batterie, einen Akku, eine Solarzelle oder eine andere Art der Energieversorgung gewährleistet werden.

Die Erfindung wird nachfolgend anhand der in den Zeichnungen dargestellten Ausführungsbeispiele ergänzend erläutert.

In der nachfolgenden Beschreibung werden weitere Merkmale und Einzelheiten der Erfindung im Zusammenhang mit den beigefügten Zeichnungen anhand von konkreten Ausführungsbeispielen näher erläutert. Dabei sind die in den einzelnen Varianten beschriebenen Merkmale und Zusammenhänge grundsätzlich auf alle Ausführungsbeispiele übertragbar. Es erfolgt keine Einschränkung der Erfindung auf eines der nachfolgenden konkreten Ausführungsbeispiele bzw. des nachfolgenden Ausführungsbeispiels. Es werden bei der Figurenbeschreibung in allen Figuren für gleiche Elemente gleiche Bezugszeichen verwendet. Dies dient der besseren Verständlichkeit der Erfindung.

Es zeigen:
- Fig. 1: ein Kontrollgerät mit einem herausnehmbaren Druckermodul,
- Fig. 2a bis 2e: verschiedene Anordnungen des Kontrollgerätes mit dem Druckermodul und/oder einem Erweiterungsmodul und/oder Kommunikationsmodul und/oder Drucker-Adapter,
- Fig. 3a bis 3d: verschiedene Ausführungen des Erweiterungsmoduls mit und ohne elektrische Verbindung zum Kontrollgerät
- Fig. 4a und 4b: verschiedene Ausführungen des Kommunikationsmoduls und
- Fig. 5a bis 5c: verschiedene Ausführungen des Drucker-Adapters

Zur Verbesserung der Verständlichkeit der Erfindung werden zunächst die Schnittstellen, die für die Erfindung von Bedeutung sind, kurz erläutert:

Die "Drucker-Schnittstelle" ist am erfindungsgemäßen Tachographen im Druckerschacht vorhanden und dient der Versorgung des Druckermoduls mit Spannung und Daten. Diese Schnittstelle ist eine drahtgebundene elektrische und/oder eine mechanische Schnittstelle.

Die "Zusatz-Schnittstelle", im Weiteren mit dem Bezugszeichen 11 versehen, kann am Tachographen im Druckerschacht vorhanden sein und dient, wenn vorhanden, der Versorgung des Erweiterungsmoduls mit Spannung und/oder Daten. Sie erweitert die o.g. Druckerschnittstelle oder wird alternativ zu dieser vom Erweiterungsmodul verwendet. Diese Schnittstelle ist eine drahtgebundene elektrische und/oder eine mechanische Schnittstelle.

Die "Erweiterungs-Schnittstelle", im Weiteren mit dem Bezugszeichen 17 versehen, ist am Erweiterungsmodul (und korrespondierend an den an das Erweiterungsmodul angeschlossenen Modulen) vorhanden und dient zum Anschluss von Zusatzgeräten wie z.B. einem Kommunikationsmodul und/oder einem Drucker-Adapter. Diese Schnittstelle ist eine elektrische Schnittstelle und kann drahtgebunden oder drahtlos ausgeführt sein.

Die "Service-Schnittstelle", im Weiteren mit dem Bezugszeichen 16 versehen, ist an jedem digitalen Tachographen an der Frontblende vorhanden. Diese Schnittstelle ist eine drahtgebundene elektrische und eine mechanische Schnittstelle.

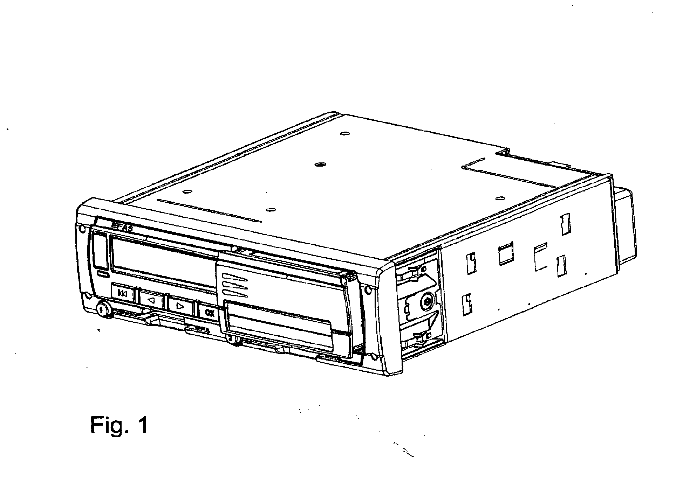

In Fig. 1 ist ein Kontrollgerät 1 dargestellt, das einen Schacht aufweist, in den ein Druckermodul 3 eingebracht ist. In einer vorteilhaften Ausgestaltung des Erfindung ist das Kontrollgerät 1 ein Tachograph, insbesondere ein digitaler Tachograph. Das Druckermodul 3 ist aus dem Schacht herausnehmbar angeordnet. Der Schacht ist in der Ausführungsform nach Fig. 1 an der Frontseite des Kontrollgerätes 1 angeordnet. Wird das Druckermodul 3 aus dem Schacht herausgenommen, so besteht die Möglichkeit, ein Erweiterungsmodul 2 anstelle des Druckermoduls 3 in den Schacht einzusetzen. Vorteilhaft ist, wenn das Erweiterungsmodul 2 nahezu identische Abmessungen wie das Druckermodul 3 aufweist, so dass dieses passgenau in den Schacht einfügbar ist.

Im Schacht ist eine Drucker-Schnittstelle angeordnet. Über diese wird über eine Gegenschnittstelle, welche am in den Schacht einzufügenden Druckermodul 3 angeordnet ist, selbige elektrisch und mechanisch kontaktiert. Somit ist beim Einführen eines Moduls 2, 3 in den Schacht, insbesondere z. B. des Druckermoduls 3, gewährleistet, dass automatisch beim Einfügen eine Kontaktierung zwischen dem Kontrollgerät 1 und dem in den Schacht einzuführenden Modul 2, 3 erfolgt bzw. im Falle des Erweiterungsmoduls 2 erfolgen kann, sofern dieses Modul die entsprechende Gegenschnittstelle aufweist.

In vorteilhafter Weise, in Fig. 1 nicht dargestellt, ist die Drucker-Schnittstelle im Schacht derartig angebracht, dass eine Kontaktierung erst dann erfolgt, wenn das Druckermodul 3 komplett in den Schacht eingeführt ist.

Der Schacht weist seitliche Führungen auf, welche dazu dienen, das Modul 2, 3, das in den Schacht eingeführt wird, zu führen, so dass eine Kontaktierung zwischen der Drucker-Schnittstelle, die im Schacht angeordnet ist, und der Gegenschnittstelle, welche am Druckermodul 3 angeordnet ist und am Erweiterungsmodul 2 angeordnet sein kann, erfolgt.

Im Schacht kann darüber hinaus eine Zusatz-Schnittstelle 11 vorhanden sein, die vom Druckermodul 3 nicht benötigt und benutzt wird. Diese Zusatz-Schnittstelle 11 wird von dem Erweiterungs-Modul 2, das alternativ zum Druckermodul 3 in den Schacht eingesteckt werden kann, benutzt, und zwar entweder zusätzlich zur Drucker-Schnittstelle oder alternativ zu dieser. Die Führung des Moduls 2, 3 im Schacht sorgt auch für eine korrekte Kontaktierung der Zusatz-Schnittstellen 11 von Erweiterungsmodul 2 und Kontrollgerät 1 zueinander.

Jedes weitere Modul, das in den Schacht einzuführen ist, weist mindestens eine der o. g. Schnittstellen auf.

Im Weiteren hat es sich als vorteilhaft erwiesen, die Energieversorgung des Druckermoduls 3 im eingeschobenen Zustand über die Drucker-Schnittstelle vorzunehmen.

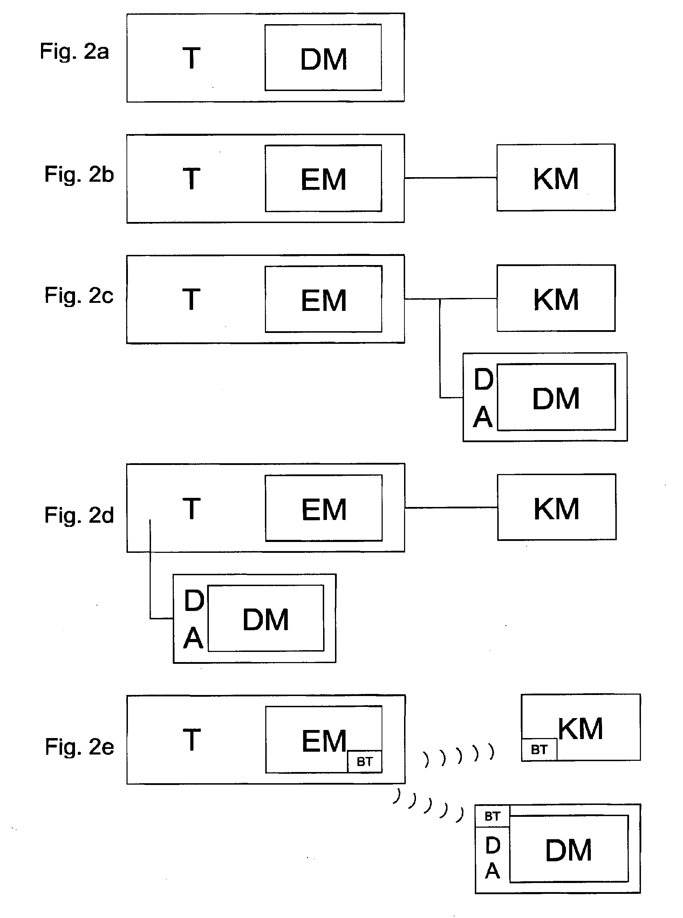

Fig. 2a zeigt das Kontrollgerät 1. In dem Kontrollgerät 1 ist ein Druckermodul 3 eingesetzt, so wie in Fig. 1 bildlich dargestellt.

In Fig. 2b ist ein Erweiterungsmodul 2 mit dem Kontrollgerät 1 kombiniert. Anstelle des Druckermoduls 3 aus Fig. 2a ist dieses in den Schacht im Kontrollgerät 1 eingeführt. An dem Erweiterungsmodul 2 ist ein Kommunikationsmodul 4 angeschlossen. In dieser Ausführungsform ist die Verbindung zwischen dem Erweiterungsmodul 2 und dem Kommunikationsmodul 4 kabelgebunden. Hierzu weisen das Erweiterungsmodul 2 und das Kommunikationsmodul 4 eine Erweiterungs-Schnittstelle 17 auf, mittels derer beide Module 2, 4 verbindbar sind.

Im Bild nicht dargestellt ist, in welcher Weise das Erweiterungsmodul 2 und das Kommunikationsmodul 4 miteinander verbunden sind. Die Verbindung kann durch das Kontrollgerät 1 hindurchgeführt werden, es ist aber auch eine direkte Verbindung zwischen den beiden Modulen denkbar.

Fig. 2c zeigt ein Kontrollgerät 1 mit einem in den Schacht eingeschobenen Erweiterungsmodul 2. An das Erweiterungsmodul 2 ist kabelgebunden ein Kommunikationsmodul 4 angeschlossen, sowie ein Drucker-Adapter 5, in den ein Druckermodul 3 eingesteckt ist. Dieses Druckermodul 3 ist vorteilhafterweise dasselbe, das auch in den Druckerschacht des Tachographen 1 passt. Über die Erweiterungs-Schnittstelle 17 sind das Kommunikationsmodul 4 und der Druckeradapter 5 mit dem Erweiterungsmodul 2 verbunden. Es ist in einer weiteren vorteilhaften Ausgestaltung der Erfindung eine zusätzliche, im Bild nicht dargestellte Schnittstelle am Erweiterungsmodul 2 vorhanden, mittels derer weitere Module anschließbar sind.

In Erweiterung von Fig. 2c kann das Kommunikationsmodul 4 eine zweite Schnittstelle aufweisen, über welche ein anderes Modul anschließbar ist, das eine entsprechende Schnittstelle aufweist. Durch die Ankopplung über diese Schnittstelle kann, wenn die erste Schnittstelle eines Moduls mit der zweiten Schnittstelle durchverbunden ist, eine große Anzahl von Modulen derart angeordnet werden, dass auch mehrere Module an das Erweiterungsmodul 2 anschließbar sind.

In Fig. 2d ist ein Kontrollgerät 1 dargestellt, an das direkt ein Drucker-Adapter 5 mit einem eingesteckten Druckermodul 3 angeschlossen ist. Dieser Anschluss erfolgt über die am Kontrollgerät 1 angeordnete Service-Schnittstelle. In den Schacht des Kontrollgerätes 1 ist ein Erweiterungsmodul 2 eingebracht. Ein Kommunikationsmodul 4 ist kabelgebunden an dem Erweiterungsmodul 2 angeschlossen.

Das Kontrollgerät 1 in Fig. 2e besitzt ein Erweiterungsmodul 2, das im Schacht des Kontrollgerätes 1 angeordnet ist. Das Erweiterungsmodul 2 weist ein Bluetooth-Modul 6 auf, welches eine drahtlose Kommunikation ermöglicht. Eine Verbindung des Erweiterungsmoduls 2 mit einem Kommunikationsmodul 4, welches ebenfalls ein Bluetooth-Modul 25 aufweist, wird drahtlos hergestellt. Ebenso weist der Drucker-Adapter 5 mit einem eingesteckten Druckermodul 3 ein Bluetooth-Modul 26 auf, so dass der Drucker-Adapter 5 drahtlos per Bluetooth mit dem Erweiterungsmodul 2 über dessen Bluetooth-Modul 6 kommunizieren kann. Anstelle der Bluetooth-Technologie kann auch ein anderes geeignetes Verfahren zur drahtlosen Kurzstrecken-Übertragung verwendet werden.

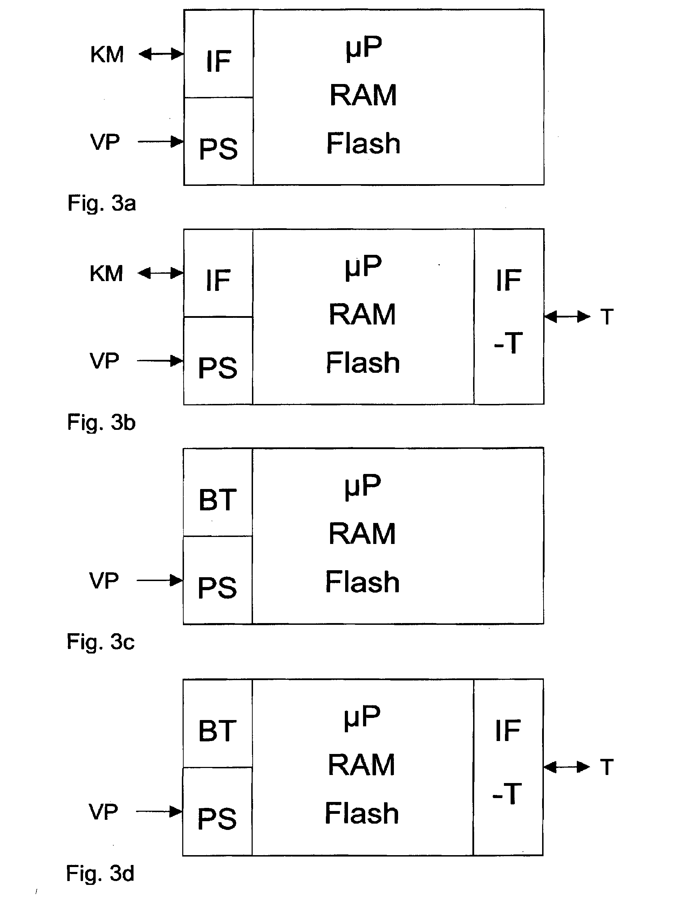

Fig. 3a zeigt das Erweiterungsmodul 2 in einer Ausführungsform, in der nur die mechanische Schnittstelle zum Tachographen 1 benutzt wird, indem der ursprünglich für das Druckermodul 3 vorgesehene Platz für das Erweiterungsmodul 2 verwendet wird, jedoch keine elektrische Verbindung zwischen dem Tachographen 1 und dem Erweiterungsmodul 2 besteht. Das Erweiterungsmodul 2 enthält einen Mikroprozessor 7. Weiterhin sind Speicherbausteine 8, zumindest aber ein Speicherbaustein, integriert. In den Speicherbausteinen 8 können Programmcode und Daten abgespeichert werden. Im Erweiterungsmodul 2 ist eine Erweiterungs-Schnittstelle 17 angeordnet, über welche eine Verbindung zu einem Kommunikationsmodul 4 möglich ist. Die Energieversorgung des Erweiterungsmoduls 2 erfolgt durch die Stromversorgungseinheit 9. Die Stromversorgungseinheit 9 ist an die Bordspannung 10 des Kraftfahrzeuges angeschlossen und wird von dieser gespeist.

In einer im Bild nicht dargestellten Ausführungsform wird die Erweiterungsschnittstelle 17 und/oder die Verbindung zwischen der Stromversorgungseinheit 9 und der Bordspannung 10 des Kraftfahrzeuges über die Zusatz-Schnittstelle 11 und das am Tachographen 1 ohnehin vorhandene rückwärtige Anschlussfeld geführt. Dadurch ist die Erweiterungsschnittstelle 17 am Erweiterungsmodul 2 von vorn nicht mehr sichtbar und es müssen keine Kabel sichtbar von vorn aus dem Erweiterungsmodul 2 herausgeführt werden. Dennoch besteht in dieser Ausführungsform keine elektrische Verbindung zwischen dem Kontrollgerät 1 und dem Erweiterungsmodul 2, was die Zulassung des Kontrollgerät 1 wesentlich erleichtert.

Fig. 3b ist ähnlich aufgebaut wie Fig. 3a. Das Erweiterungsmodul 2 ist jedoch über die Drucker- und/oder die Zusatz-Schnittstelle 11 mit dem Kontrollgerät 1 elektrisch verbunden.

Fig. 3c zeigt das Erweiterungsmodul 2 in einer ähnlichen Ausführung wie Fig. 3a, jedoch hier mit einem Bluetooth-Modul 6, welches eine drahtlose Datenübertragung zwischen einem Kommunikationsmodul (in Fig. 3c nicht dargestellt) und dem Erweiterungsmodul 2 ermöglicht und somit die Erweiterungs-Schnittstelle 17 aus Fig. 3a ersetzt. Die Energieversorgung wird, wie in Fig. 3a und Fig. 3b, über eine Stromversorgungseinheit 9 sichergestellt, die mit Hilfe der Bordspannung 10 des Kraftfahrzeuges versorgt wird. Das Erweiterungsmodul 2 in dieser Ausführungsform weist weiterhin einen Mikroprozessor 7 und Speicherbausteine 8 zum Speichern von Programmcode und Daten auf.

In einer in Fig. 3c nicht dargestellten Ausführungsform sind sowohl das Bluetooth-Modul 6 als auch die Erweiterungs-Schnittstelle 17 am Erweiterungsmodul vorhanden.

Fig. 3d ist ähnlich der Fig. 3c. Neben dem Bluetooth-Modul 6 und der Stromversorgungseinheit 9, gespeist durch die Bordspannung 10, ist weiterhin eine Verbindung über die Drucker-Schnittstelle und/oder die Zusatz-Schnittstelle 11 vorhanden, die das Kontrollgerät 1 mit dem Erweiterungsmodul 2 verbindet.
In einer in Fig. 3d nicht dargestellten Ausführungsform sind sowohl das Bluetooth-Modul 6 als auch die Erweiterungs-Schnittstelle 17 am Erweiterungsmodul vorhanden.

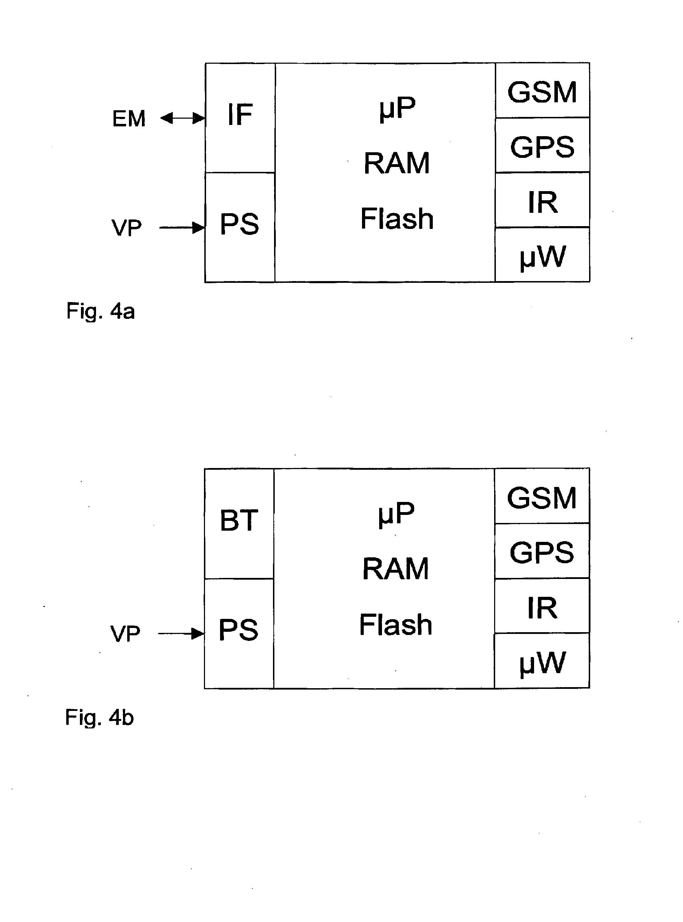

In Fig. 4a und Fig. 4b sind Ausführungsformen des Kommunikationsmoduls 4 dargestellt.

Fig. 4a zeigt das Kommunikationsmodul 4, das mit einem Mikroprozessor 24 und Speicherbausteinen 27 ausgestattet ist. Weiterhin weist das Kommunikationsmodul 4 eine Schnittstelle 21 auf, die mit der Erweiterungsschnittstelle 17 des Erweiterungsmoduls 2 korrespondiert und eine kabelgebundene Kommunikation mit dem Erweiterungsmodul 2 realisiert. Die Energieversorgung erfolgt durch eine Stromversorgungseinheit 28, die an die Bordspannung 10 des Kraftfahrzeuges angeschlossen ist. In einer im Bild nicht dargestellten Ausführungsform werden die Kabelverbindung zwischen Erweiterungsmodul 2 und Kommunikationsmodul 4 und die Kabelverbindung zur Energieversorgung des Kommunikationsmoduls 4 in einem gemeinsamen Kabel geführt. Das Kommunikationsmodul 4 weist ein GSM-Modul 12, ein GPS-Modul 14, ein Infrarot-Modul 15 und ein Mikrowellen-Modul 13 auf, welche zur kabellosen Kommunikation zu Gegenstellen außerhalb des Fahrzeuges dienen.

Fig. 4b zeigt einen ähnlichen Aufbau wie Fig. 4a. Anstelle der Schnittstelle 21 des Kommunikationsmoduls 4 ist ein Bluetooth-Modul 25 in das Kommunikationsmodul 4 eingebracht, so dass per Bluetooth mit dem Erweiterungsmodul 2 kommuniziert werden kann und eine Verbindung mit diesem herstellbar ist.

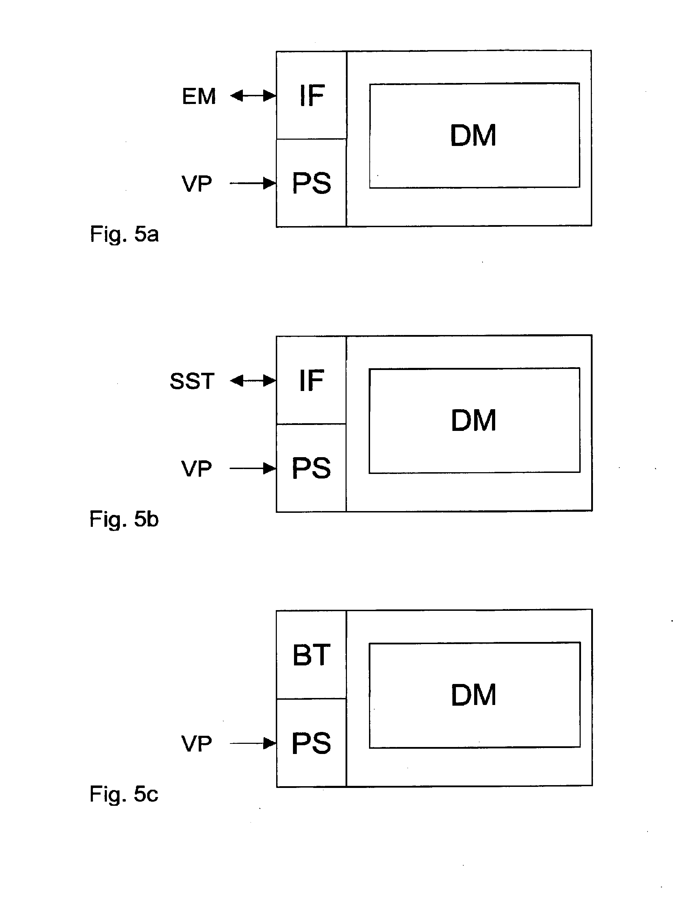

Fig 5a zeigt den Drucker-Adapter 5 in einer Ausführungsform, in der das Druckermodul 3 in den Drucker-Adapter 5 eingeschoben ist. Ebenfalls weist der Drucker-Adapter 5 eine Schnittstelle 29 auf, die eine Verbindung und/oder Kommunikation mit dem Erweiterungsmodul 2 ermöglicht. Diese Schnittstelle 29 korrespondiert mit der Erweiterungsschnittstelle 17 des Erweiterungsmoduls 2. Die Stromversorgungseinheit 30 wird durch die Bordspannung 10 des Fahrzeuges versorgt.

Fig. 5b zeigt eine analoge Ausgestaltung zu Fig. 5a. Der Drucker-Adapter 5 wird hierbei jedoch nicht mit dem Erweiterungsmodul 2, sondern mit der Service-Schnittstelle 16 des Tachographen 1 (in Fig. 5b nicht dargestellt) mittels seiner speziellen Schnittstelle 29 verbunden.

Fig. 5c zeigt den Drucker-Adapter 5 mit einem Bluetooth-Modul 26. Die Stromversorgungseinheit 30 wird durch die Bordspannung 10 des Fahrzeuges versorgt. In den Drucker-Adapter 5 ist ein Druckermodul 3 eingesteckt. Das Bluetooth-Modul 26 kann eine Verbindung zu einem Erweiterungsmodul 2 herstellen, sofern dieses ebenfalls ein Bluetooth-Modul aufweist.

### Bezugszeichenliste

- 1: Kontrollgerät (Tachograph)
- 2: Erweiterungsmodul
- 3: Druckermodul
- 4: Kommunikationsmodul
- 5: Drucker-Adapter
- 6: Bluetooth-Modul
- 7: Mikroprozessor des Erweiterungsmoduls
- 8: Speicherbaustein des Erweiterungsmoduls
- 9: Stromversorgung des Erweiterungsmoduls
- 10: Bordspannung des Kraftfahrzeugs
- 11: Zusatz-Schnittstelle zwischen Tachograph und Erweiterungsmodul
- 12: GSM-Modul
- 13: Mikrowellen-Modul
- 14: GPS-Modul
- 15: Infrarot-Modul
- 16: Service-Schnittstelle des Tachographen
- 17: Erweiterungs-Schnittstelle
- 21: Schnittstelle des Kommunikationsmoduls zum Erweiterungsmodul
- 24: Mikroprozessor des Kommunikationsmoduls
- 25: Bluetooth-Modul des Kommunikationsmoduls
- 26: Bluetooth-Modul des Drucker-Adapters
- 27: Speicherbausteine des Kommunikationsmoduls
- 28: Stromversorgung des Kommunikationsmoduls
- 29: Schnittstelle des Drucker-Adapters
- 30: Stromversorgung des Drucker-Adapters

## Patentansprüche

1. Kontrollgerät (1) für ein Fahrzeug mit einem Druckermodul (3), welches eine Papierrolle zum Ausdrucken von fahrzeugrelevanten und/oder fahrerrelevanten Informationen aufweist, und einer Rechnereinheit, mittels derer eine Datenübertragung zwischen dem Kontrollgerät (1) und dem Druckermodul (3) vornehmbar ist und die Rechnereinheit zur Bearbeitung und/oder Verarbeitung und/oder Speicherung von fahrzeugrelevanten und/oder fahrerrelavanten Informationen in einer elektronischen Speichereinheit des Kontrollgerätes (1) dient, wobei das Druckermodul (3) in einem Schacht des Kontrollgerätes(1) entfernbar angeordnet ist, **dadurch gekennzeichnet, dass** im Schacht neben der Druckerschnittstelle eine Zusatz-Schnittstelle (11) angeordnet ist und in den Schacht ein Erweiterungsmodul (2) anstelle des Druckermoduls (3) einsetzbar ist, welches ebenfalls über die im Schacht angeordnete Drucker-Schnittstelle und/oder die Zusatz-Schnittstelle (11) mit dem Kontrollgerät (1) verbindbar ist und das Erweiterungsmodul (2) jeweils eine Erweiterungs-Schnittstelle (17) aufweist, mittels derer mindestens ein Kommunikationsmodul (4) und/oder Druckermodul (3) über ein Drucker-Adapter (5) mit dem Kontrollgerät (1) verbindbar ist.

2. Kontrollgerät nach Anspruch 1, **dadurch gekennzeichnet , dass** das Druckermodul (3) mittels des Drucker-Adapters (5) vom Kontrollgerät (1) abgesetzt betreibbar ist.

3. Kontrollgerät nach Anspruch 1, **dadurch gekennzeichnet, dass** die Erweiterungs-Schnittstelle (17) des Erweiterungsmoduls (2) über die Zusatz-Schnittstelle (11) des Kontrollgerätes (1) verbindbar ist und diese somit nicht von vorn sichtbar und zugänglich ist.

4. Kontrollgerät nach Anspruch 1 oder 3, **dadurch gekennzeichnet, dass** die Zusatz-Schnittstelle (11) und weitere Schnittstellen (16, 17, 21, 29) mechanische und/oder elektrische Schnittstellen sind.

5. Kontrollgerät nach einem der Ansprüche 1, 3 oder 4, **dadurch gekennzeichnet, dass** das Erweiterungsmodul (2) mindestens eine Zusatz-Schnittstelle (11) aufweist, die mit der korrespondierenden Schnittstelle (11) des Kontrollgerätes (1) verbindbar ist und dass das Erweiterungsmodul (2) über die Erweiterungs-Schnittstelle (17) mit mindestens einem weiteren Kommunikationsmodul verbindbar ist.

6. Kontrollgerät nach Anspruch 5, **dadurch gekennzeichnet , dass** das weitere Kommunikationsmodul das Druckermodul (3) mit Drucker-Adapter (5), ein weiteres Druckermodul, ein Navigationsgerät, ein Mauterfassungsgerät, eine Freisprecheinrichtung für Mobiltelephonie, Flottenmanagementgeräte, ein Unfalldatenschreiber, ein Alarmsystem und/oder ein fahrzeug-nicht-relevantes Gerät ist oder eine entsprechende Funktion in Zusammenarbeit mit dem Erweiterungsmodul (2) realisiert.

7. Kontrollgerät nach einem der Ansprüche 5 oder 6, **dadurch gekennzeichnet, dass** die Verbindung zwischen dem Erweiterungsmodul (2) und dem Kommunikationsmodul (4) über eine eigene Datenleitung und/oder über ein bereits im Fahrzeug vorhandenes Bussystem und/oder über Bluetooth und/oder über W-LAN und/oder über Infrarot und/oder über Mikrowellen erfolgt.

8. Kontrollgerät nach Anspruch 1 oder 3 bis 5, **dadurch gekennzeichnet, dass** die Erweiterungs-Schnittstelle (17) des Erweiterungsmoduls (2) zur kabelgebundenen Verbindung mit anderen Modulen dient und als USB-Anschlussstellen, Mini-USB-Anschlussstellen, SD-Anschlussstellen ausgeführt ist.

9. Kontrollgerät nach einem der Ansprüche 1 oder 3 bis 8, **dadurch gekennzeichnet, dass** das Kommunikationsmodul (4) und das Erweiterungsmodul (2) die technischen Mittel zu einer drahtlosen Kommunikation aufweisen.

10. Kontrollgerät nach einem der Ansprüche 1 oder 3 bis 9, **dadurch gekennzeichnet, dass** an dem Erweiterungsmodul (2) und/oder dem Kommunikationsmodul (4) eine drahtlose und/oder eine kabelgebundene und/oder eine integrierte Mensch-Maschine-Schnittstelle zur Bedienung der Funktionen des Erweiterungsmoduls (2) und/oder des Kommunikationsmodul(4) und/oder des Kontrollgerätes (1) angeordnet ist.

11. Kontrollgerät nach Anspruch 10, **dadurch gekennzeichnet, dass** die Mensch-Maschine-Schnittstelle einen Touch-Screen und/oder ein Bedienfeld für das Erweiterungsmodul (2) und/oder das Kommunikationsmodul (4) und/oder das Kontrollgerät (1) aufweist und Funktionen des Kommunikationsmoduls (4) und/oder des Erweiterungsmoduls (2) und/oder des Kontrollgerätes (1) steuert.

## Claims

1. Control apparatus (1) for a vehicle with a printer module (3), which has a paper roll for printing out vehicle-relevant and/or driver-relevant data, and a computer unit by means of which data transmission between the control apparatus (1) and the printer module (3) can be undertaken and the computer unit serves for handling and/or processing and/or storing vehicle-relevant and driver-relevant data in an electronic memory unit of the control apparatus (1), wherein the printer module (3) is arranged in a shaft of the control apparatus (1) to be removable, **characterised in that** apart from the printer interface an auxiliary interface (11) is arranged in the shaft and an extension module (2), which is similarly connectible with the control apparatus (1) by way of the printer interface arranged in the shaft and/or auxiliary interface (11), is insertable into the shaft instead of the printer module (3), and the extension model (2) has a respective extension interface (7) by means of which at least one communications module (4) and/or printer module (3) is or are connectible with the control apparatus (1) by way of a printer adapter (5).

2. Control apparatus according to claim 1, **characterised in that** the printer module (3) is operable by means of the printer adapter (5) separate from the control apparatus (1).

3. Control apparatus according to claim 1, **characterised in that** the extension interface (17) of the extension module (2) is connectible by way of the auxiliary interface (11) of the control apparatus (1) and this is thus not visible and accessible from the front.

4. Control apparatus according to claim 1 or 3, **characterised in that** the auxiliary interface (11) and further interfaces (16, 17, 21, 29) are mechanical and electrical interfaces.

5. Control apparatus according to any one of claims 1, 3 and 4, **characterised in that** the extension module (2) comprises at least one auxiliary interface (11) which is connectible with the corresponding interface (11) of the control apparatus (1) and that the extension module (2) is connected with at least one further communications module by way of the extension interface (17).

6. Control apparatus according to claim 5, **characterised in that** the further communications module is the printer module (3) with printer adapter (5), a further printer module, navigation apparatus, toll detection apparatus, a hands-free device for mobile telephone communication, fleet management apparatus, an event data recorder, an alarm system and/or a vehicle-non-relevant apparatus or realises a corresponding function in cooperation with the extension module (2).

7. Control apparatus according to one of claims 5 and 6, **characterised in that** the connection between the extension module (2) and the communications module (4) takes place by way of an own data line and/or by way of a bus system already present in the vehicle and/or by way of Bluetooth and/or by way W-LAN and/or by way of infrared and/or by way of microwaves.

8. Control apparatus according to any one of claims 1 and 3 to 5, **characterised in that** the extension interface (17) of the extension module (2) serves for hard-wired connection with other modules and is constructed as USB coupling points, mini-USB coupling points or SD coupling points.

9. Control apparatus according to any one of claims 1 and 3 to 8, **characterised in that** the communications module (4) and the extension module (2) include technical means for wire-free communication.

10. Control apparatus according to any one of claims 1 or 3 to 9, **characterised in that** a wire-free and/or a hard-wired and/or an integrated man-machine interface for operation of the functions of the extension module (2) and/or of the communications module (4) and/or of the control apparatus (1) is or are arranged at the extension module (2) and/or the communications module (4).

11. Control apparatus according to claim 10, **characterised in that** the man-machine interface comprises a touchscreen and/or a control panel for the extension module (2) and/or the communications module (4) and/or the control apparatus (1) and controls functions of the communications module (4) and/or of the extension module (2) and/or of the control apparatus (1).

## Revendications

1. Appareil de contrôle (1) pour un véhicule avec un module d'imprimante (3) qui présente un rouleau de papier pour imprimer les informations importantes du véhicule et/ou du conducteur et avec une unité d'ordinateur grâce à laquelle une transmission de données entre l'appareil de contrôle (1) et le module d'imprimante (3) peut être actionnée et l'unité d'ordinateur servant à traiter et/ou à modifier et/ou à enregistrer les informations importantes du véhicule et/ou du conducteur dans une unité électronique de stockage de l'appareil de contrôle (1), le module d'imprimante (3) étant situé dans une cavité de l'appareil de contrôle (1) de manière amovible, caractérisé en cela que dans la cavité à côté de l'interface de l'imprimante, une interface supplémentaire (11) est située et dans la cavité un module d'élargissement (2) peut être utilisé à la place du module d'imprimante (3) qui peut être également connecté par l'interface d'imprimante située dans la cavité et/ou par l'interface supplémentaire (11) à l'appareil de contrôle (1) et que le module d'élargissement (2) présente respectivement une interface d'élargissement (17) à l'aide de laquelle un module de communication (4) et/ou un module d'imprimante est connecté via un adaptateur d'imprimante (5) à l'appareil de contrôle (1).

2. Appareil de contrôle selon la revendication 1 caractérisé en cela que le module de l'imprimante (3) peut être exploité avec l'adaptateur de l'imprimante (5) séparément de l'appareil de contrôle (1).

3. Appareil de contrôle selon la revendication 1 caractérisé en cela que l'interface d'élargissement (17) du module d'élargissement (2) peut être connectée via l'interface supplémentaire (11) de l'appareil de contrôle (1) et que celle-ci n'est ainsi pas visible ni accessible par l'avant.

4. Appareil de contrôle selon la revendication 1 ou 3 caractérisée en cela que l'interface supplémentaire (11) et d'autres interfaces (16,17, 21, 29) sont des interfaces mécaniques et/ou électriques.

5. Appareil de contrôle selon l'une des revendications 1, 3 ou 4 caractérisé en cela que le module d'élargissement (2) présente au moins une interface supplémentaire (11) qui peut être connecté à l'interface correspondante (11) de l'appareil de contrôle (1) et en cela que le module d'élargissement (2) peut être connecté via l'interface d'élargissement (17) à au moins un autre module de communication.

6. Appareil de contrôle selon la revendication 5 caractérisé en cela que l'autre module de communication est le module d'imprimante (3) avec adaptateur d'imprimante (5), un autre module d'imprimante, un appareil de navigation, un appareil de saisie de péage, un dispositif main libres pour les téléphones mobiles, des appareils de gestion de la flotte, un dispositif d'enregistrement des données d'accident, un système d'alarme et/ou un appareil non lié au véhicule ou réalise une fonction correspondante en combinaison avec le module d'élargissement (2).

7. Appareil de contrôle selon l'une des revendications 5 ou 6 caractérisé en cela que la connexion entre le module d'élargissement (2) et le module de communication (4) se fait via un câble de données propre et/ou via un système Bus déjà présent dans le véhicule et/ou par Bluetooth et/ou par Wifi et/ou par infrarouge et/ou par micro-ondes.

8. Appareil de contrôle selon la revendication 1 ou 3 à 5 caractérisé en cela que l'interface d'élargissement (17) du module d'élargissement (2) sert à la connexion par câble aux autres modules et est exécutée en tant que ports USB, ports mini USB, ports SD.

9. Appareil de contrôle selon l'une des revendications 1 ou 3 à 8 caractérisé en cela que le module de communication (4) et le module d'élargissement (2) présentent les moyens techniques pour établir une communication sans fil.

10. Appareil de contrôle selon l'une des revendications 1 ou 3 à 9 caractérisé en cela que sur le module d'élargissement (2) et/ou sur le module de communication (4) une interface homme-machine sans fil et/ou à câble et/ou intégrée est située pour la commande des fonctions du module d'élargissement (2) et/ou du module de communication (4) et/ou de l'appareil de contrôle (1).

11. Appareil de contrôle selon la revendication 10 caractérisé en cela que l'interface homme-machine présente un écran tactile et/ou un champ de commande pour le module d'élargissement (2) et/ou le module de communication (4) et/ou l'appareil de contrôle (1) et commande les fonctions du module de communication (4) et/ou du module d'élargissement (2) et/ou de l'appareil de contrôle (1).
